# EUROPÄISCHE PATENTSCHRIFT

(11) **EP 1 525 420 B1**
(45) Veröffentlichungstag und Bekanntmachung des Hinweises auf die Patenterteilung: **16.11.2005**
(21) Anmeldenummer: 03766060.2
(22) Anmeldetag: 28.07.2003
(51) Int. Cl.: F16L 15/00, F16L 15/04

(54) **KUPPLUNG VON BOHRANKERN**
COUPLING FOR ANCHOR BOLTS
ACCOUPLEMENT POUR BOULONS D'ANCRAGE

(30) Priorität: 01.08.2002 AT 11772002
(43) Veröffentlichungstag der Anmeldung: 27.04.2005
(73) Patentinhaber: Atlas Copco Mai GmbH, 9710 Feistritz/Drau (AT)
(72) Erfinder: PAPOUSEK, Herbert, A-9710 Feistritz/Drau (AT)
(74) Vertreter: Beer, Manfred
(86) Internationale Anmeldenummer: PCT/AT2003/000214
(87) Internationale Veröffentlichungsnummer: WO 2004/013531

(56) Entgegenhaltungen:
- WO-A-97/35137
- GB-A- 2 146 085
- US-A- 4 373 750
- US-A- 4 762 344

## Beschreibung

Die Erfindung betrifft eine Kupplung von Bohrankern mit einer Muffe mit Innengewinde und mit zwei Ankerrohren, die Außengewinde tragen und die von einander gegenüberliegenden Seiten her in die Muffe geschraubt sind mit den Merkmalen des einleitenden Teils des unabhängigen Anspruches 1.

Problematisch bei Kupplungen für Ankerrohre ist es, dass im Bereich der bekannten Kupplungen durch den Hohlraum der Ankerrohre beim Bohren strömendes Spülmedium (Luft oder Wasser) und nach dem Fertigstellen des Bohrlochs durch den Hohlraum der Ankerrohre zu deren vorderen, im Bohrloch aufgenommenen Ende gedrückte, abbindende Masse (z.B. ein Zement-Mörtel) austreten kann. So entstehen Verluste an Spülmedien und im Falle von abbindender Masse bei leckenden Kupplungen Pfropfen aus abbindender Masse, die das vollständige Auffüllen des Bohrlochs ringsum den Bohranker herum verhindern.

Eine Kupplung der eingangs genannten Gattung ist aus der DE-A-42 20 636 bekannt. Die DE-A-4 220 636 zeigt eine Kupplung von Bohrankern mit einer Muffe mit Innengewinde und mit zwei Ankerrohren, die Außengewinde tragen und die von einander gegenüberliegenden Seiten her in die Muffe geschraubt sind, wobei im wesentlichen in der Längsmitte der Muffe eine nach innen vorspringende Ringrippe vorgesehen ist, und wobei die Stirnfläche der in der Muffe angenommenen Enden der Ankerrohre im Bereich der Ringrippe angeordnet sind und unmittelbar aneinander anliegen, wobei die Außenflächen der Enden der Ankerrohre dichtend an der inneren Endfläche der Ringrippe anliegen. In der Kupplung gemäß der DE-A-42 20 636 sind neben der Ringrippe angeordnete Ringdichtungen vorgesehen.

Der Erfindung liegt die Aufgabe zu Grunde, eine Kupplung der eingangs genannten Gattung zur Verfügung zu stellen, die auch bei den beim Bohren (Dreh-Schlag-Bewegung des Bohrankers) auftretende Belastungen zuverlässig dicht ist und bleibt.

Gelöst wird diese Aufgabe erfindungsgemäß mit einer Kupplung, welche die Merkmale von Anspruch 1 aufweist.

Bevorzugte und vorteilhaft Ausgestaltungen der erfindungsgemäßen Kupplung sind Gegenstand der Unteransprüche.

Da bei der erfindungsgemäßen Kupplung die Enden der in die Muffe eingeschraubten Ankerrohre in die in der Muffe vorgesehene Ringrippe dichtend eingreifen und wegen der erfindungsgemäß an der Ringrippe vorgesehenen Ringdichtung ist das Austreten von Spülmedium und/oder abbindender Masse im Bereich der Kupplung verhindert.

Wenn gemäß einer bevorzugten Ausführungsform der erfindungsgemäßen Kupplung vorgesehen ist, dass die in der Muffe aufgenommenen Enden der Ankerrohre, die mit ihren Stirnflächen unmittelbar aneinander anliegen, mit ihren Stirnflächen dichtend aneinander anliegen, ist eine zusätzliche Abdichtung im Bereich der Kupplung gewährleistet, da zwischen den Enden der in der Kupplung angeordneten Ankerrohre kein Austritt von Spülmedium und/oder abbindender Masse möglich ist. Zusätzlich hat diese Maßnahme der Erfindung den Vorteil, dass die Dreh-Schlag-Kraft, welche der Bohranker bei dem Bohren eines Lochs im Gebirge verworfen ist, problemloser, weil unmittelbar von Ankerrohr zu Ankerrohr übertragen wird.

Weitere Einzelheiten, Merkmale und Vorteile der erfindungsgemäßen Kupplung ergeben sich aus der nachstehenden Beschreibung des in den Zeichnungen beispielhaft wiedergegebenen Ausführungsbeispieles.

Es zeigt:
Fig. 1 teilweise im Schnitt eine Kupplung,
Fig. 2 im vergrößerten Maßstab und teilweise geschnitten aneinander anliegende Enden von Ankerrohren (ohne Muffe),
Fig. 3 im Längsschnitt eine Muffe,
Fig. 4 eine Einzelheit IV aus Fig. 3,
Fig. 5 ein Ankerrohr, teilweise im Schnitt,
Fig. 6 die Einzelheit VI aus Fig. 5,
Fig. 7 in vergrößertem Maßstab eine Einzelheit der Kupplung im Bereich der Ringrippe der Muffe und
   Die Ringdichtung gemäß Anspruch 1 ist in den Figuren 1-7 nicht dargestellt.
Fig. 8 eine erfindungsgemäße Kupplung mit Muffe und Ringdichtung.

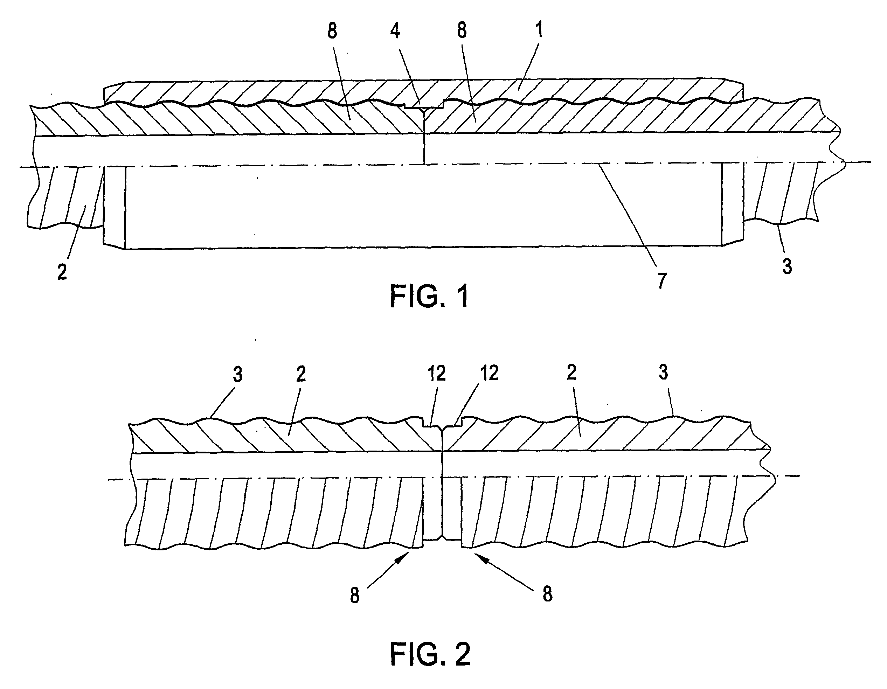

Eine Kupplung besteht, wie in Fig. 1 gezeigt, aus einer Muffe 1 und zwei Ankerrohren 2, die mit ihren Enden 8 in der Muffe 1 aufgenommen sind.

Die Muffe 2 besitzt zwei durch eine nach innen vorstehende Ringrippe 4 voneinander getrennte Innengewindeabschnitte 5, deren Gewinde gleichsinnig sind. Die Ankerrohre 2 tragen an ihrer Außenfläche ein Außengewinde 3, das zum Innengewinde 5 der Muffe 1 passt.

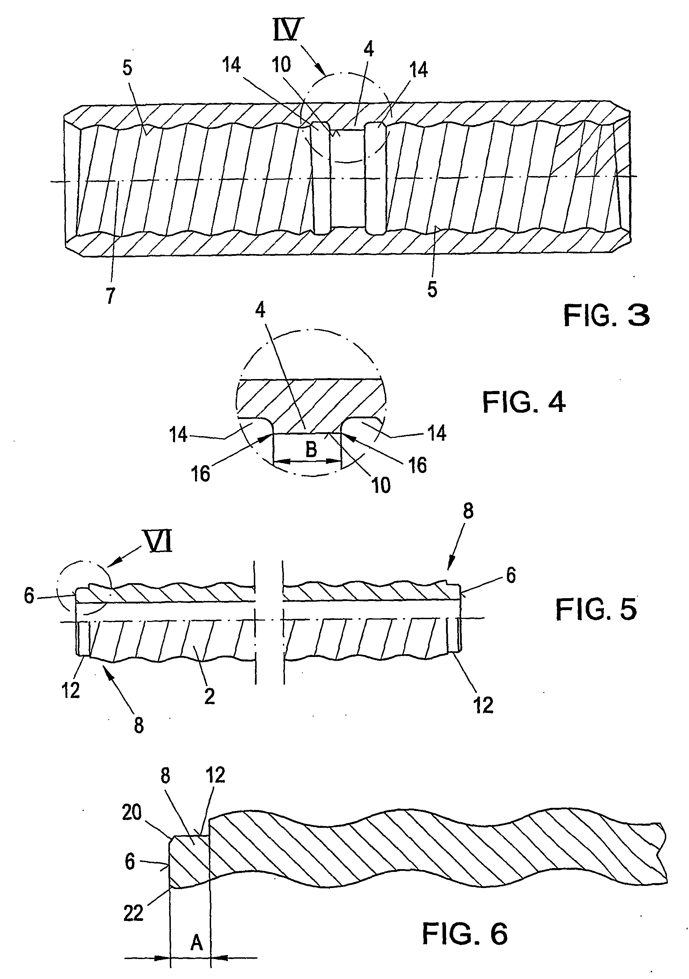

Die Ankerrohre 2 haben, vorzugsweise an beiden Enden 8, einen gewindefreien Abschnitt, der sich von den Stirnflächen 6 des Ankerrohres 2 weg erstreckt. Dieser gewindefreie Abschnitt ist mit einer zylindrischen Außenfläche 12 ausgebildet. Die Stirnflächen 6 der Ankerrohre 2, die ringförmig ausgebildet sind, besitzen außen eine Fase 20 und innen gegebenenfalls eine Fase 22 (Fig. 6).

Die in der Längsmitte der Muffe 1 angeordnete Ringrippe 4 besitzt eine zylinderförmige innere Endfläche 10 und zwei zur Achse 7 der Muffe 1 im wesentlichen normal stehende Seitenflächen 16, die beidseits der Ringrippe 4 mit einem Radius (Krümmung) in einen innengewindefreien Abschnitt 14 der Innenfläche der Muffe 2 übergehen.

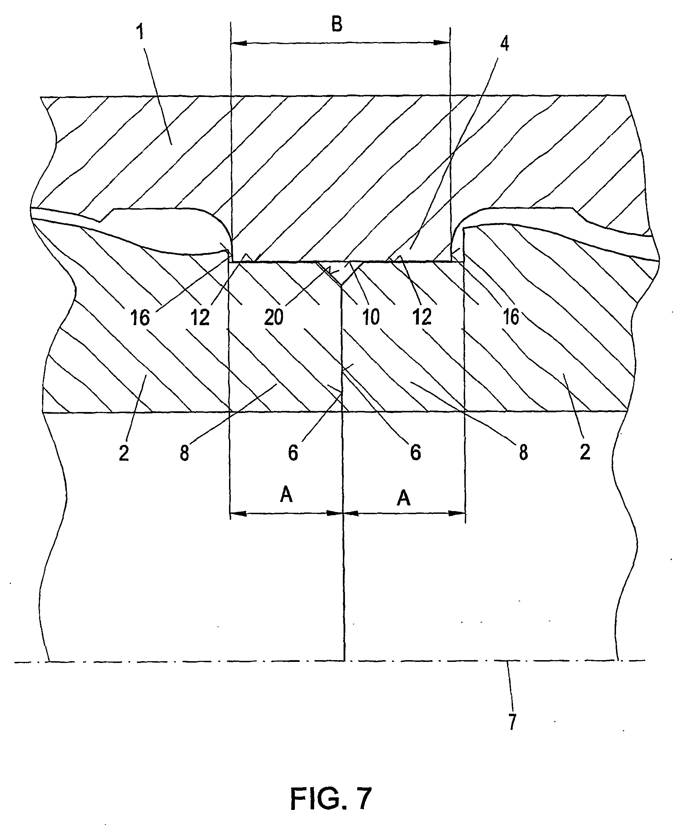

Die Situation bei zusammengebauter Kupplung ist in Fig. 7 gezeigt. Es ist ersichtlich, dass die Ankerrohre 2 mit ihren gewindefreien Enden 8 innerhalb der Ringrippe 4 angeordnet sind, wobei die Zylinderflächen 12 an den Enden 8 der Ankerrohre 2 dichtend an der inneren Endfläche 10 der Ringrippe 4 anliegen (der in Fig. 7 dargestellte Spalt zwischen Flächen 10 und 12 liegt in der Praxis nicht vor und ist nur der Übersichtlichkeit wegen dargestellt).

Fig. 7 zeigt auch, dass die ringförmigen Stirnflächen 6 der Enden 8 der Ankerrohre 2 unmittelbar und dichtend aneinander anliegen.

Die Breite B der Ringrippe 4, also die in Richtung der Achse 7 der Muffe 1 gemessene Länge der zylindrischen inneren Endfläche 10 der Ringrippe 4, ist etwa so groß ist wie die Summe der in Richtung der Achse, d.h. in Längsrichtung der Ankerrohre 2 gemessene Länge A der gewindefreien Abschnitte 12 an den Enden 8 der Ankerrohre 2. Dadurch wird erreicht, dass eine Muffe 1 auf ein Ankerrohr 2 nicht zu weit geschraubt werden kann, da die Schulter am Ende der Zylinderfläche 12 des Ankerrohres 2 an der Seitenfläche 16 der Ringrippe 4 anschlägt, wenn die Stirnfläche 6 dieses Ankerrohres 2 etwa in der Mitte der Längserstreckung der Rippe 4 angeordnet ist. So ist sichergestellt, dass ein im wesentlichen symmetrischer Aufbau der erfindungsgemäßen Kupplung bestehend aus Muffe 1 und zwei in dieser aufgenommenen (eingeschraubten) Ankerrohre 2 gegeben ist.

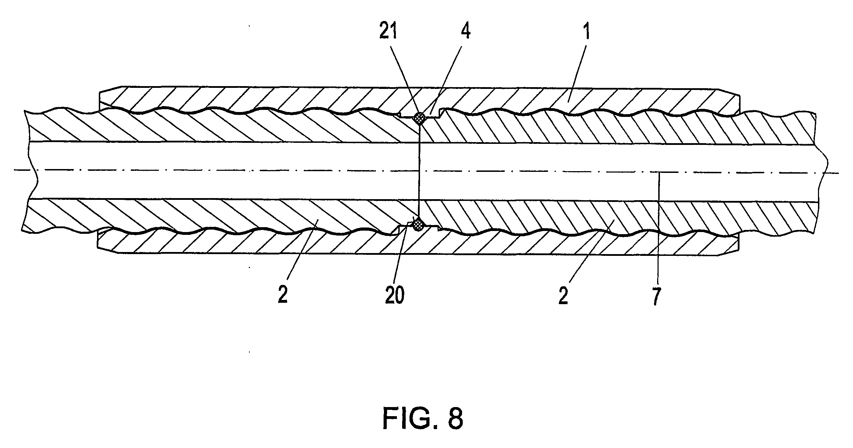

Bei der in Fig. 8 gezeigten, erfindungsgemäßen Kupplung ist in der nach innen weisenden Zylinderfläche der Ringrippe 4 eine ringförmige Nut vorgesehen, in der eine Ringdichtung 21 aus elastischem Werkstoff (O-Ring) eingesetzt ist.

Die in die Muffe 1 eingeschraubten Ankerrohre 2 liegen mit ihren Fasen 20 am Außenrand der auch bei dieser Ausführungsform aneinander anliegenden Stirnflächen 6 an der Ringdichtung 21 an, so daß die Abdichtung zwischen den beiden Ankerrohren 2 im Bereich der Kupplung verbessert wird.

Es ist noch darauf hinzuweisen, dass in Fig. 8 die Ringdichtung 21 "idealisiert", also mit ihrer ursprünglichen, kreisrunden Querschnittsform dargestellt ist. Tatsächlich wird sie im zusammengebauten Zustand der Kupplung in ihrem über die Innenfläche der Ringrippe 4 vorstehenden Teil zu einer dreiecksförmigen Queschnittsform entsprechend den äußeren Fasen 20 an den Stirnflächen 6 der Ankerrohre 2 verformt sein.

Die Querschnittsform der Ringdichtung 21 muss nicht (kreis-)rund sein. Beispielsweise kann die Ringdichtung eine polygonale Querschnittsform (rechteckig oder quadratisch) haben. Es ist auch denkbar, dass der über die Innenfläche der Ringrippe 4 überstehende Teil der Ringdichtung 21 eine keilförmige, sich radial nach innen verjüngende Querschnittsform hat.

Zusammenfassend kann ein bevorzugtes Ausführungsbeispiel der Erfindung wie folgt dargestellt werden:

Eine Kupplung von Bohrankern besitzt eine Muffe 1 mit Innengewinde 5 und zwei mit Außengewinde 3 versehenen Ankerrohre 2, deren Enden 8 in die Muffe 1 eingeschraubt sind. Die Muffe 1 trägt in ihrer Längsmitte eine Ringrippe 4 mit zylinderförmiger, innerer Endfläche 10. In diese Ringrippe 4 greifen die Enden 8 der Ankerrohre 2 dichtend ein, wozu diese mit zylinderförmigen, gewindefreien Umfangsflächen 12 ausgebildet sind. Um die Dichtheit der Kupplung zu verbessern und das Übertragen von Schlagenergie von Ankerrohr 2 zu Ankerrohr 2 verlustärmer zu gestalten, liegen die ringförmigen Stirnflächen 6 der Ankerrohre 2 im Bereich der Ringrippe 4 dichtend aneinander an. So wird eine leckfreie und den Austritt von Spülmedium und/oder abbindender Masse verhindernde Kupplung für Bohranker zur Verfügung gestellt.

## Patentansprüche

1. Kupplung von Bohrankern mit einer Muffe (1) mit Innengewinde (5) und mit zwei Ankerrohren (2) mit Enden (8), die Stirnflächen (6) und Außenflächen (12) aufweisen, wobei die Ankerrohre (2) Außengewinde (3) tragen und von einander gegenüberliegenden Seiten her in die Muffe (1) geschraubt sind, wobei im wesentlichen in der Längsmitte der Muffe (1) eine nach innen vorspringende Ringrippe (4) vorgesehen ist, wobei die Stirnflächen (6) der in der Muffe (1) aufgenommenen Enden (8) der Ankerrohre (2) im Bereich der Ringrippe (4) angeordnet sind und unmittelbar aneinander anliegen, **dadurch gekennzeichnet, dass** die Ringrippe (4) eine zylinderförmige, innere Endfläche (10) besitzt, dass die Außenflächen (12) der Enden (8) der Ankerrohre (2) zylinderförmig ausgebildet und gewindefreisind und dichtend an der inneren Endfläche (10) der Ringrippe (4) anliegen, dass die Stirnflächen (6) der Ankerrohre (2) außen eine Fase (20) aufweisen, dass an der Ringrippe (4) wenigstens eine Ringdichtung (21) angeordnet ist, und dass die Ankerrohre (2) mit den Fasen (20) am Außenrand ihrer Stirnflächen (6) an der Ringdichtung (21) anliegen.

2. Kupplung nach Anspruch 1, **dadurch gekennzeichnet, dass** die Stirnflächen (6) der Ankerrohre (2) dichtend aneinander anliegen.

3. Kupplung nach Anspruch 1 oder 2, **dadurch gekennzeichnet, dass** in der Muffe (1) beidseits der Ringrippe (4) innengewindefreie Bereiche (14) vorgesehen sind.

4. Kupplung nach einem der Ansprüche 1 bis 3, **dadurch gekennzeichnet, dass** die Seitenflächen (16) der Ringrippe (4) zur Achse (7) der Muffe (1) normal ausgerichtet sind.

5. Kupplung nach einem der Ansprüche 1 bis 4, **dadurch gekennzeichnet, dass** die Seitenflächen (16) der Ringrippe (1) mit Radien in die Innenfläche der Muffe (1), insbesondere in gewindefreie Abschnitte (14) derselben, übergehen.

6. Kupplung nach einem der Ansprüche 1 bis 5, **dadurch gekennzeichnet, dass** die Stirnflächen (6) der Ankerrohre (2) innen eine Fase (22) aufweisen.

7. Kupplung nach einem der Ansprüche 1 bis 5, **dadurch gekennzeichnet, dass** die in Richtung der Achse (7) der Muffe (1) gemessene Breite (B) der Ringrippe (4) im wesentlichen gleich groß ist wie die Summe der in Längsrichtung der Ankerrohre (2) gemessenen Längen (A) der zylinderförmig ausgebildeten, gewindefreien Enden (8) der Ankerrohre (2).

8. Kupplung nach einem der Ansprüche 1 bis 7, **dadurch gekennzeichnet, dass** die Ringdichtung (21) in eine nach innen offene Ringnut in der zylinderförmigen, inneren Endfläche (10) der Ringrippe (4) eingesetzt ist.

9. Kupplung nach Anspruch 8, **dadurch gekennzeichnet, dass** der über die innere Endfläche (10) der Ringrippe (4) überstehende Teil der Ringdichtung (21) durch die Fasen (20) der Stirnflächen (6) der Ankerrohre (2) verformt ist.

## Claims

1. Coupling of drill anchors with a sleeve (1) with an inside thread (5) and with two anchor pipes (2) having ends (8), which have front surfaces (6) and outside surfaces (12), whereby the anchor pipes (2) bear an outside thread (3) and which are screwed into the sleeve (1) from opposing sides, essentially in the lengthwise middle of the sleeve (1) there being an annular rib (4) which projects to the inside, and the front surfaces (6) of the ends (8) of the anchor pipes (2), which ends are held in the sleeve (1), being located in the area of the annular rib (4) and directly adjoining one another, **characterized in that** the annular rib (4) has a cylindrical inner end surface (10) and that the outside surfaces (12) of the ends (8) of the anchor pipes (2) are cylindrically shaped and thread-free ends and adjoin the inner end surface (10) of the annular rib (4), forming a seal, that the front surfaces (6) of the anchor pipes (2) have a chamfer (20) on the outside, there is at least one annular seal (21) on the annular rib (4) and the anchor pipes (2) with the chamfers (20) on the outside edge of their front surfaces (6) adjoin the annular seal (21).

2. Coupling as claimed in claim 1, wherein the front surfaces (6) of the anchor pipes (2) adjoin one another to form a seal.

3. Coupling as claimed in claim 1 or 2, wherein in the sleeve (1) on either side of the annular rib (4) there are areas (14) which have no inside thread.

4. Coupling as claimed in one of claims 1 to 3, wherein the side surfaces (16) of the annular rib (4) are aligned normally to the axis (7) of the sleeve (1).

5. Coupling as claimed in one of claims 1 to 4, wherein the side surfaces (16) of the annular rib (1) with radii pass into the inside surface of the sleeve (1), especially into segments (14) which are free of threads.

6. Coupling as claimed in one of claims 1 to 5, wherein the front surfaces (6) of the anchor pipes (2) have a chamfer (22) on the inside.

7. Coupling as claimed in one of claims 1 to 5, wherein the width (B) of the annular rib (4) measured in the direction of the axis (7) of the sleeve (1) is essentially the same size as the sum of the lengths (A) of the cylindrically shaped, thread-free ends (8) of the anchor pipes (2), which lengths are measured in the lengthwise direction of the anchor pipes (2).

8. Coupling as claimed in claim 1 to 7, wherein the annular seal (21) is inserted into an annular groove in the cylindrical inner end surface (10) of the annular rib (4) which is open to the inside

9. Coupling as claimed in claim 8, wherein the part of the annular seal (21) which projects over the inner end surface (10) of the annular rib (4) is deformed by the chamfers (20) of the front surfaces (6) of the anchor pipes (2).

## Revendications

1. Accouplement pour boulons d'ancrage, qui présente un manchon (1) muni d'un filet intérieur (5) et deux tubes d'ancrage (2) dont les d'extrémités (8) ont une surface frontale (6) et une surface extérieure (12), les tubes d'ancrage (2) présentant un filet extérieur (3) et étant vissés dans le manchon (1) par ses côtés opposés, une nervure annulaire (4) qui s'étend vers l'intérieur étant prévue essentiellement au milieu de la longueur du manchon (1) et les surfaces frontales (6) des extrémités (8) des tubes d'ancrage (2) logés dans le manchon (1) étant agencées dans la zone de la nervure annulaire (4) et reposant directement l'une contre l'autre, **caractérisé en ce que** la nervure annulaire (4) présente une surface d'extrémité intérieure (10) de forme cylindrique, **en ce que** les surfaces extérieures (12) des extrémités (8) des tubes d'ancrage (2) sont configurées en forme cylindrique et non filetés et reposent de manière étanche contre la surface d'extrémité intérieure (10) de la nervure annulaire (4), **en ce que** les surfaces frontales (6) des tubes d'ancrage (2) présentent à l'extérieur un chanfrein (20), **en ce qu'**au moins un joint annulaire d'étanchéité (21) est agencé sur la nervure annulaire (4) et **en ce que** les tubes d'ancrage (2) reposent contre le joint annulaire d'étanchéité (21) avec le chanfrein (20) sur le bord extérieur de leur surface frontale (6).

2. Accouplement selon la revendication 1, **caractérisé en ce que** les surfaces frontales (6) des tubes d'ancrage (2) reposent l'une contre l'autre de manière étanche.

3. Accouplement selon la revendication 1 ou 2, **caractérisé en ce que** des zones (14) sans filet intérieur sont prévues dans le manchon (1), des deux côtés de la nervure annulaire (4).

4. Accouplement selon l'une des revendications 1 à 3, **caractérisé en ce que** les surfaces latérales (16) de la nervure annulaire (4) sont orientées perpendiculairement à l'axe (7) du manchon (1).

5. Accouplement selon l'une des revendications 1 à 4, **caractérisé en ce que** les surfaces latérales (16) de la nervure annulaire (1) se convertissent par rayons en la surface intérieure du manchon (1) et en particulier en des tronçons non filetés (14) de celui-ci.

6. Accouplement selon l'une des revendications 1 à 5, **caractérisé en ce que** les surfaces frontales (6) des tubes d'ancrage (2) présentent à l'intérieur un chanfrein (20).

7. Accouplement selon l'une des revendications 1 à 5, **caractérisé en ce que** la largeur (B) de la nervure annulaire (4), mesurée dans la direction de l'axe (7) du manchon (1), est essentiellement égale à la somme des longueurs (A) des extrémités configurés en forme cylindrique et non filetées (8) des tubes d'ancrage (2) mesurées dans le sens de la longueur des tubes d'ancrage (2).

8. Accouplement selon l'une des revendications 1 à 7, **caractérisé en ce que** le joint annulaire d'étanchéité (21) est inséré dans une rainure annulaire ouverte vers l'intérieur dans la surface d'extrémité intérieure (10) de forme cylindrique de la nervure annulaire (4).

9. Accouplement selon la revendication 8, **caractérisé en ce que** la partie du joint annulaire d'étanchéité (21), qui se trouve au-dessus de la surface intérieure d'extrémité (10) de la nervure annulaire (4) est déformée par les chanfreins (20) des surfaces frontales (6) des tubes d'ancrage (2).
